(19) Europäisches Patentamt
European Patent Office
Office européen des brevets

(11) **EP 4 597 975 A1**

(12) **EUROPEAN PATENT APPLICATION**
published in accordance with Art. 153(4) EPC

(43) Date of publication:
06.08.2025 Bulletin 2025/32

(21) Application number: 23869567.0

(22) Date of filing: 21.04.2023

(51) International Patent Classification (IPC):
*H04L 45/12* (2022.01)

(52) Cooperative Patent Classification (CPC):
H04L 43/08; H04L 43/0852; H04L 43/087;
H04L 45/12

(86) International application number:
PCT/CN2023/089873

(87) International publication number:
WO 2024/066311 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 CN 202211182887

(71) Applicant: ZTE CORPORATION
Shenzhen, Guangdong 518057 (CN)

(72) Inventors:
• ZHU, Xiangyang
Shenzhen, Guangdong 518057 (CN)
• YU, Jinghai
Shenzhen, Guangdong 518057 (CN)

(74) Representative: Aipex B.V.
Vestdijk 51
5611 CA Eindhoven (NL)

(54) **METHOD AND DEVICE FOR DETERMINING PHASE DIFFERENCE, STORAGE MEDIUM, AND ELECTRONIC DEVICE**

(57) Provided are a method and apparatus for determining a phase difference, a storage medium, and an electronic device. The method includes sending a first message to a downstream node at a first start time of a window of a predetermined target cycle template, where the first message carries a target slot length of the target cycle template; receiving a second message returned by the downstream node at a second start time of a window of the target cycle template, where the second message carries a first offset value, the first offset value is used for indicating an offset of a receiving time at which the downstream node receives the first message in the target cycle template, and the target slot length is used by the downstream node for determining the target cycle template; and determining, based on the target slot length, the first offset value, and a second offset value, a phase difference between the target cycle template used by the upstream node and the target cycle template used by the downstream node, where the second offset value is used for indicating an offset of a receiving time at which the upstream node receives the second message in the target cycle template.

Send a first message to a downstream node at a first start time of a window of a predetermined target cycle template, where the first message carries a target slot length of the target cycle template — S302

Receive a second message returned by the downstream node at a second start time of a window of the target cycle template, where the second message carries a first offset value, the first offset value is used for indicating an offset of a receiving time at which the downstream node receives the first message in the target cycle template, and the target slot length is used by the downstream node for determining the target cycle template — S304

Determine a phase difference between the target cycle template used by the upstream node and the target cycle template used by the downstream node based on the target slot length, the first offset value, and a second offset value, where the second offset value is used for indicating an offset of a receiving time at which the upstream node receives the second message in the target cycle template — S306

**FIG. 3**

EP 4 597 975 A1

## Description

TECHNICAL FIELD

Embodiments of this disclosure relate to the field of communications, specifically a method and apparatus for determining a phase difference, a storage medium, and an electronic device.

BACKGROUND

With the rapid development of network communication technology, determinism is becoming an important indicator and key technology for future networks. Therefore, the Internet Engineering Task Force (IETF) Deterministic Networking (DetNet) working group has proposed large-scale deterministic IP network forwarding technology (LDN). However, in large-scale networks, usually only frequency synchronization is achievable, and network-wide time synchronization is difficult to implement.

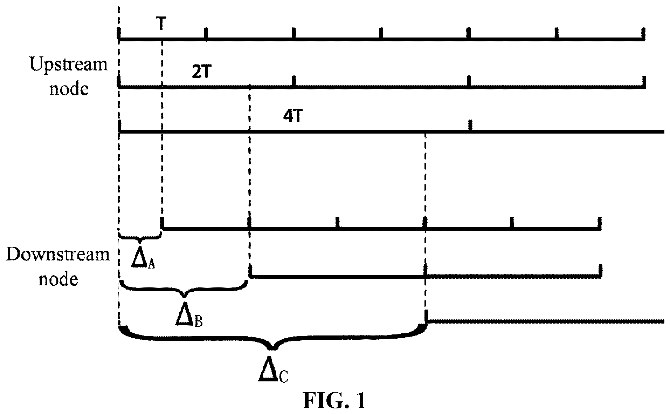

In the related art, within the LDN domain, nodes adopt a time-slot cyclic queue scheduling technique, which may support a single template or multiple cycle templates. If upstream and downstream nodes support cycle templates with the same time-slot length, there may be a certain offset between the slots of the same templates of the upstream node and the downstream node after device startup, known as the phase difference ∆. If the upstream node and the downstream node support multiple cycle templates simultaneously, slots for each cycle template have a phase difference, and the phase differences of different templates may vary. A typical example is shown in FIG. 1, which illustrates the phase difference between slots of upstream and downstream nodes with multiple cycle templates in the related art. As shown in FIG. 1, the upstream node and the downstream node support three cycle templates A, B, and C simultaneously, with time-slot lengths configured as T, 2T, and 4T, respectively. T is the base time-slot length or period. The phase differences corresponding to these three templates are ∆A, ∆B, and ∆C, respectively. In deterministic service path planning, it is necessary to calculate the precise end-to-end delay and jitter for each cycle template to select the optimal path. This may require obtaining the phase difference of the slots of each identical cycle template between the upstream node and the downstream node. However, the LDN technology cannot provide a precise phase difference of the slots.

Currently, no effective solution has been proposed to solve the problem of failing to accurately obtain a phase difference corresponding to the same cycle template supported by upstream and downstream nodes in the related art.

SUMMARY

Embodiments of this disclosure provide a method and apparatus for determining a phase difference, a storage medium, and an electronic device to solve at least the problem of failing to accurately obtain a phase difference corresponding to the same cycle template supported by upstream and downstream nodes in the related art.

According to an embodiment of this disclosure, a method for determining a phase difference is provided. The method is applied to an upstream node. The method includes sending a first message to a downstream node at a first start time of a window of a predetermined target cycle template, where the first message carries a target slot length of the target cycle template; receiving a second message returned by the downstream node at a second start time of a window of the target cycle template, where the second message carries a first offset value, the first offset value is used for indicating an offset of a receiving time at which the downstream node receives the first message in the target cycle template, and the target slot length is used by the downstream node for determining the target cycle template; and determining, based on the target slot length, the first offset value, and a second offset value, a phase difference between a target cycle template used by the upstream node and a target cycle template used by the downstream node, where the second offset value is used for indicating an offset of a receiving time at which the upstream node receives the second message in the target cycle template.

According to an embodiment of this disclosure, an apparatus for determining a phase difference is provided. The apparatus is applied to an upstream node. The apparatus includes a sending module configured to send a first message to a downstream node at a first start time of a window of a predetermined target cycle template, where the first message carries a target slot length of a target cycle template; a receiving module configured to receive a second message returned by the downstream node at a second start time of a window of the target cycle template, where the second message carries a first offset value, the first offset value is used for indicating an offset of a receiving time at which the downstream node receives the first message in the target cycle template, and the target slot length is used by the downstream node for determining the target cycle template; and a determination module configured to determine, based on the target slot length, the first offset value, and a second offset value, a phase difference between a target cycle template used by the upstream node and a target cycle template used by the downstream node, where the second offset value is used for indicating an offset of a receiving time at which the upstream node receives the second message in the target cycle template.

According to an embodiment of this disclosure, a computer-readable storage medium is provided. The storage medium stores a computer program which, when executed by a processor, causes the processor to perform steps of the method of any previous method embodiment.

According to an embodiment of this disclosure, an electronic device is provided. The electronic device includes a memory and a processor. The memory stores a computer program. The processor is configured to execute the computer program to perform steps of the method of any previous method embodiment.

BRIEF DESCRIPTION OF DRAWINGS

FIG. 1 is a diagram illustrating the phase difference between slots of upstream and downstream nodes with multiple cycle templates in the related art.

FIG. 2 is a block diagram of a hardware structure of a mobile terminal for a method for determining a phase difference according to an embodiment of this disclosure.

FIG. 3 is a flowchart of a method for determining a phase difference according to an embodiment of this disclosure.

FIG. 4 is an overall flowchart of phase difference measurement according to an embodiment of this disclosure.

FIG. 5 is a diagram of sending a measurement message according to an embodiment of this disclosure.

FIG. 6 is a first flowchart of measuring a phase difference corresponding to a cycle template T between N1 and N2 according to an embodiment of this disclosure.

FIG. 7 is a first example diagram of a principle for calculating a phase difference according to an embodiment of this disclosure.

FIG. 8 is a second flowchart of measuring a phase difference corresponding to a cycle template T between N1 and N2 according to an embodiment of this disclosure.

FIG. 9 is a second example diagram of a principle for calculating a phase difference according to an embodiment of this disclosure.

FIG. 10 is a diagram of a sub-TLV encapsulation format according to an embodiment of this disclosure.

FIG. 11 is a block diagram of an apparatus for determining a phase difference according to an embodiment of this disclosure.

DETAILED DESCRIPTION

Embodiments of this application are described hereinafter in detail with reference to drawings and in conjunction with embodiments.

It is to be noted that terms such as "first" and "second" in the description, claims, and drawings of this disclosure are used for distinguishing between similar objects and are not necessarily used for describing a particular order or sequence.

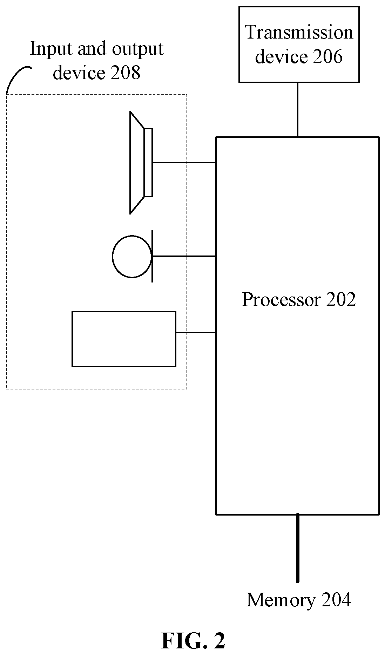

Method embodiments provided in the embodiments of this application may be performed in a mobile terminal, a computer terminal, or a similar computing apparatus. Using being executed in a mobile terminal as an example, FIG. 2 is a block diagram of a hardware structure of a mobile terminal for a method for determining a phase difference according to an embodiment of this disclosure. As shown in FIG. 2, the mobile terminal may include one or more (one is shown in FIG. 2) processors 202 (the processors 202 may include, but are not limited to, a processing apparatus such as a microcontroller unit (MCU) or a field programmable gate array (FPGA)) and a memory 204 configured to store data. The mobile terminal may also include a transmission device 206 having a communication function and an input and output device 208. It is to be understood by those of ordinary skill in the art that the structure shown in FIG. 2 is illustrative and not intended to limit the structure of the mobile terminal. For example, the mobile terminal may also include more or fewer components than the components shown in FIG. 2 or may have a configuration different from the configuration shown in FIG. 2.

The memory 204 may be configured to store a computer program such as a software program and a module of application software, for example, the computer program corresponding to the method for determining a phase difference in embodiments of this disclosure. The processor 202 executes the computer program stored in the memory 204 to perform various functional applications and data processing, that is, to implement the preceding method. The memory 204 may include a high-speed random-access memory and may further include a non-volatile memory such as one or more magnetic storage apparatuses, flash memories or other non-volatile solid-state memories. In some examples, the memory 204 may also be a memory remote from the processor 202 and connectable to the mobile terminal via a network. Examples of the network include, but are not limited to, the Internet, an intranet, a local area network, a mobile communication network, and a combination thereof.

The transmission device 206 is configured to receive or send data via a network. Examples of the network may include a wireless network provided by a communication provider of the mobile terminal. In an example, the transmission device 206 includes a network interface controller (NIC) that may be connected to other network devices via a base station and thus can communicate with the Internet. In an example, the transmission device 206 may be a radio frequency (RF) module configured to communicate with the Internet wirelessly.

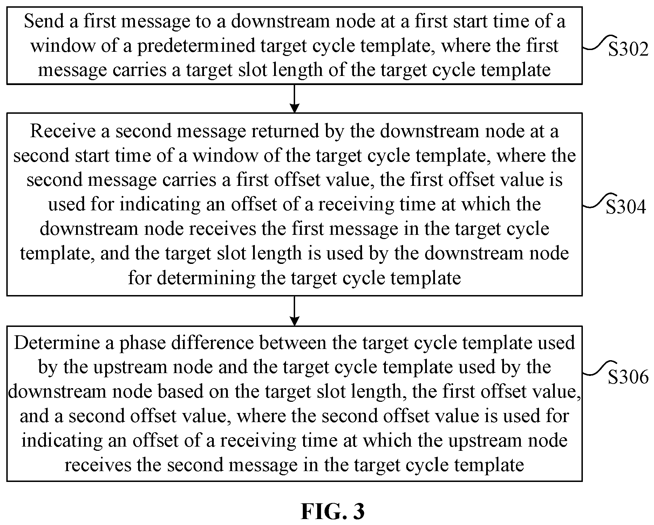

An embodiment provides a method for determining a phase difference. FIG. 3 is a flowchart of a method for determining a phase difference according to an embodiment of this disclosure. As shown in FIG. 3, the method includes the following steps:

In step S302, a first message is sent to a downstream node at a first start time of a window of a predetermined target cycle template, where the first message carries a target slot length of the target cycle template.

In step S304, a second message returned by the downstream node at a second start time of a window of the target cycle template is received, where the second message carries a first offset value, the first offset value is used for indicating an offset of a receiving time at which the downstream node receives the first message in the target cycle template, and the target slot length is used by the downstream node for determining the target cycle template.

In step S306, a phase difference between the target cycle template used by the upstream node and the target cycle template used by the downstream node is determined based on the target slot length, the first offset value, and a second offset value, where the second offset value is used for indicating an offset of a receiving time at which the upstream node receives the second message in the target cycle template.

These steps may be performed by a network node such as a network upstream node, may be performed by a network device such as a network switch or a router, or may be performed by a unit or a terminal that has information receiving, sending, and processing capabilities.

In this embodiment, the first message may carry slot lengths corresponding to target cycle templates with different target slot lengths. For example, the first message may carry three target cycle templates: target cycle template A, target cycle template B, and target cycle template C. The target slot length of target cycle template A is T, the target slot length of target cycle template B is 2T, and the target slot length of target cycle template C is 4T. Accordingly, the phase difference corresponding to each target cycle template between the upstream node and the downstream node can be randomly determined. Additionally, the corresponding phase differences can be determined based on the priority order of these three target cycle templates. For example, if the priority order of the three target cycle templates is that the priority order of target cycle template A is greater than the priority order of target cycle template B, and the priority order of target cycle template B is greater than the priority order of target cycle template C, the phase difference corresponding to target cycle template A between the upstream node and the downstream node can be determined first, followed by the phase difference corresponding to target cycle template B, and finally the phase difference corresponding to target cycle template C. Of course, the phase differences corresponding to target cycle templates A, B, and C between the upstream node and the downstream node can also be determined simultaneously. It is to be noted that the example of different target cycle templates with different target slot lengths is an example embodiment. The target cycle templates with different target slot lengths are not limited to this example.

In this embodiment, interactions between multiple upstream and downstream nodes may also be included. For example, when there are node 1, node 2, node 3, and node 4, where node 2 is the downstream node of node 1 and the upstream node of node 3, and node 3 is the downstream node of node 2 and the upstream node of node 4, it is required to determine the phase difference corresponding to the same target cycle template between node 1 and node 2, the phase difference corresponding to the same target cycle template between node 2 and node 3, and the phase difference corresponding to the same target cycle template between node 3 and node 4. Accordingly, the corresponding phase differences can be determined based on the priority order of the phase difference determination requirements among these multiple nodes. For example, if the priority order of the phase difference determination requirement of node 1 and node 2 is greater than the priority order of the phase difference determination requirement of node 2 and node 3, and the priority order of the phase difference determination requirement of node 2 and node 3 is greater than the priority order of the phase difference determination requirement of node 3 and node 4, the phase difference corresponding to the same target cycle template between node 1 and node 2 can be determined first, followed by the phase difference corresponding to the same target cycle template between node 2 and node 3, and finally the phase difference corresponding to the same target cycle template between node 3 and node 4. It is to be noted that the example of the upstream and downstream nodes is an example embodiment. The upstream and downstream nodes are not limited to this example.

In this embodiment, the first message carrying the target slot length of the target cycle template is sent to the downstream node at the first start time of the window of the predetermined target cycle template and the second message that is returned by the downstream node at the second start time of a window of the target cycle template and carries the first offset value used for indicating the offset of the receiving time at which the downstream node receives the first message in the target cycle template is received, the phase difference between the target cycle template used by the upstream node and the target cycle template used by the downstream node is determined based on the target slot length, the first offset value, and the second offset value used for indicating the offset of the receiving time at which the upstream node receives the second message in the target cycle template. By using the method of this disclosure, the phase difference between the target cycle template used by the upstream node and the target cycle template used by the downstream node is determined by acquiring the slot offset generated by the downstream node receiving the first message from the upstream node, acquiring the slot offset generated by the upstream node receiving the second message from the downstream node in the same target cycle template, and acquiring the target slot length of the target cycle template, thereby achieving the purpose of determining the phase difference corresponding to the same cycle template supported by the upstream node and the downstream node in the absence of accurate link delay information, solving the problem in the related art where the phase difference corresponding to the same cycle template supported by the upstream node and the downstream node cannot be accurately acquired, and achieving the effect of accurately calculating the end-to-end delay and jitter through the slot phase difference to determine the optimal deterministic service path.

In an example embodiment, determining, based on the target slot length, the first offset value, and the second offset value, the phase difference between the target cycle template used by the upstream node and the target cycle template used by the downstream node includes determining a second relationship among the phase difference, the target slot length, the first offset value, and the second offset value based on a first relationship between the first offset value and the second offset value; in response to determining based on the second relationship that the phase difference has multiple values, determining a respective link delay range corresponding to each value of the phase difference to obtain multiple link delay ranges, where a link delay is a link delay between the upstream node and the downstream node; and determining the unique value of the phase difference based on a third relationship between each link delay range and an estimated delay obtained by pre-estimating the link delay. In this embodiment, when the target slot length is T and the values of the phase difference are $\Delta 1$ and $\Delta 2$, if it is determined that the delay range corresponding to $\Delta 1$ is [0, T/5], the delay range corresponding to $\Delta 2$ is [T/3, T], and the estimated delay offset range may be [0, T/4) (or may be, for example, [0, T/5], [T/6, T/5], or [T/5, T/4)), when the estimated delay is T/4, it is indicated that the estimated delay is neither within the delay range corresponding to $\Delta 1$ nor within the delay range corresponding to $\Delta 2$. In this case, it is feasible to determine the phase difference by adding up the estimated delay and a value taken from the estimated delay offset range. For example, T/5 is taken from the estimated delay offset range, and T/5 and T/4 are added up to obtain 9T/20, that is, the phase difference $\Delta 2$ between the target cycle template used by the upstream node and the target cycle template used by the downstream node, where T/5 < T/3 < 9T/20. It is to be noted that the example of the target slot length, the phase difference, the delay range corresponding to the phase difference, and the estimated delay is an example embodiment. The target slot length, the phase difference, the delay range corresponding to the phase difference, and the estimated delay are not limited to this example.

In an example embodiment, determining the second relationship among the phase difference, the target slot length, the first offset value, and the second offset value based on the first relationship between the first offset value and the second offset value includes at least one of the following: in response to the first relationship indicating that the first offset value is less than or equal to the second offset value, determining that the second relationship satisfies the following formula: $\Delta = (a2 + T - a1) / 2$ or $\Delta = (a2 - a1) / 2$ ; or in response to the first relationship indicating that the first offset value is greater than the second offset value, determining that the second relationship satisfies the following formula: $\Delta = (a2 + T - a1) / 2$ or $\Delta = (a2 + 2T - a1) / 2$.

Here $\Delta$ denotes the phase difference, T denotes the target slot length, $a1$ denotes the first offset value, and $a2$ denotes the second offset value. In this embodiment, when $a1$ is T/4 and $a2$ is T/2, $\Delta$ is 5T/8 or T/8 obtained by substituting $a1$ and $a2$ into the formula; and when $a1$ is T/2 and $a2$ is T/4, $\Delta$ is 3T/8 or 7T/8 obtained by substituting $a1$ and $a2$ into the formula. That is, two phase differences can be obtained through the first offset value, the second offset value, and the formulas above. In this case, the unique value can be determined from the two phase differences through the respective delay ranges corresponding to the two phase differences and the estimated delay obtained by pre-estimating the link delay. In addition, the actual link delay can be reversely deduced from the first offset value and the two phase differences, and the estimated delay should be slightly different from the actual link delay.

In an example embodiment, determining the respective link delay range corresponding to each value of the phase difference includes at least one of the following: in response to the phase difference $\Delta = (a2 - a1) / 2$, determining that the link delay range is $n * T + \dfrac{a1 + a2}{2} \pm \dfrac{T}{4}$ ; in response to the first relationship indicating that the first offset value is less than or equal to the second offset value and in response to the phase difference $\Delta = (a2 + T - a1) / 2$, determining that the link delay range is $n*T + \dfrac{a1 + a2 + T}{2} \pm \dfrac{T}{4}$; in response to the first relationship indicating that the first offset value is greater than the second offset value and in response to the phase difference $\Delta = (a2 + T - a1) / 2$, determining that the link delay range is $n*T + \dfrac{a1 + a2 + T}{2} \pm \dfrac{T}{4}$; or in response to the phase difference $\Delta = (a2 + 2T - a1) / 2$, determining that the link delay range is $n*T + \dfrac{a1 + a2}{2} \pm \dfrac{T}{4}$.

Here $n$ is an integer. In this embodiment, $n$ is an integer that is tried to be taken. For example, in the case where $T = 10$ $\mu$s, $a1 = 1$ $\mu$s, and $a2 = 3$ $\mu$s, in the case where one phase difference $(a2 - a1) / 2$ is 1 $\mu$s and the other phase difference $(a2 + T - a1) / 2$ is 6 $\mu$s, the link delay range corresponding to $\Delta = 1$ $\mu$s is $n*T + 2 \pm 2.5$ $\mu$s, and the link delay range corresponding to $\Delta = 6$ $\mu$s is $n*T + 7 \pm 2.5$ $\mu$s, and when the estimated delay is 23 $\mu$s, the link delay range may be represented as $2*10 + 2 + 1$ $\mu$s, that is, $\Delta = 1$ $\mu$s is the final value of the phase difference. When $T = 20$ $\mu$s, $a1 = 15$ $\mu$s, and $a2 = 5$ $\mu$s, in the case where one phase difference $(a2 + T - a1) / 2$ is 5 $\mu$s and the other phase difference $(a2 + 2T - a1) / 2$ is 15 $\mu$s, the link delay range corresponding to $\Delta = 5$ $\mu$s is $n*T + 20 \pm 5$ $\mu$s, the link delay range corresponding to $\Delta = 15$ $\mu$s is $n*T + 10 \pm 5$ $\mu$s, and when the estimated delay is 83 $\mu$s, the link delay range may be represented as $3*20 + 20 + 3$ $\mu$s, that is, $\Delta = 5$ $\mu$s is the final value of the phase difference. It is to be noted that this determination manner of $n$ and the phase value is an example embodiment. The determination manner of n and the phase value is not limited to this example.

In an example embodiment, determining the unique value of the phase difference based on the third relationship between each link delay range and the estimated delay obtained by pre-estimating the link delay includes: determining a target link delay range from the link delay ranges based on the third relationship, where the target link delay range is a range within which the estimated delay falls; and determining the unique value of the phase difference corresponding to the target link delay range. In this embodiment, when there are three link delay ranges, namely link delay range 1, link delay range 2, and link delay range 3, when it is determined based on the estimated delay and the estimated delay offset range that the estimated delay range is link delay range 1, link delay range 1 is determined as the target link delay range, that is, the phase difference corresponding to link delay range 1 is the unique value; when it is determined based on the estimated delay and the estimated delay offset range that the estimated delay range is link delay range 2, link delay range 2 is determined as the target link delay range, that is, the phase difference corresponding to link delay range 2 is the unique value; and when it is determined based on the estimated delay and the estimated delay offset range that the estimated delay range is link delay range 3, link delay range 3 is determined as the target link delay range, that is, the phase difference corresponding to link delay range 3 is the unique value. It is to be noted that the example of the target link delay range is an example embodiment. The target link delay range is not limited to this example.

In an example embodiment, the first message includes a first type field and a first length field. The first type field is used for indicating that the type of the first message is a type used for measurement of the phase difference. The first length field is used for indicating the target slot length. In this embodiment, the first message may also include, for example, a field used for indicating the length of the first message.

In an example embodiment, the second message includes a second type field, a second length field, and a compensation field. The second type field is used for indicating that the type of the second message is a type used for measurement of the phase difference. The second length field is used for indicating the target slot length. The compensation field is used for indicating the first offset value. In this embodiment, the second message may also include, for example, a field used for indicating the length of the second message, a field used for carrying the first offset value, and a field used for carrying the second offset value. The second offset value may not be carried in the message.

In an example embodiment, after determining, based on the target slot length, the first offset value, and the second offset value, the phase difference between the target cycle template used by the upstream node and the target cycle template used by the downstream node, the method also includes at least one of the following: saving the phase difference locally in the upstream node; or announcing the phase difference to another network node. In this embodiment, after the phase difference is stored locally in the upstream node, when the cycle template is subsequently used again by the upstream node and the downstream node, the phase difference corresponding to the cycle template can be called locally in the upstream node. After the phase difference corresponding to the cycle template is announced to another network node, the another network node may store the phase difference corresponding to the cycle template. When the cycle template is required, the phase difference corresponding to the cycle template can be directly called.

Apparently, the preceding embodiments are some of the embodiments of this disclosure.

This disclosure is described in detail hereinafter in conjunction with embodiments.

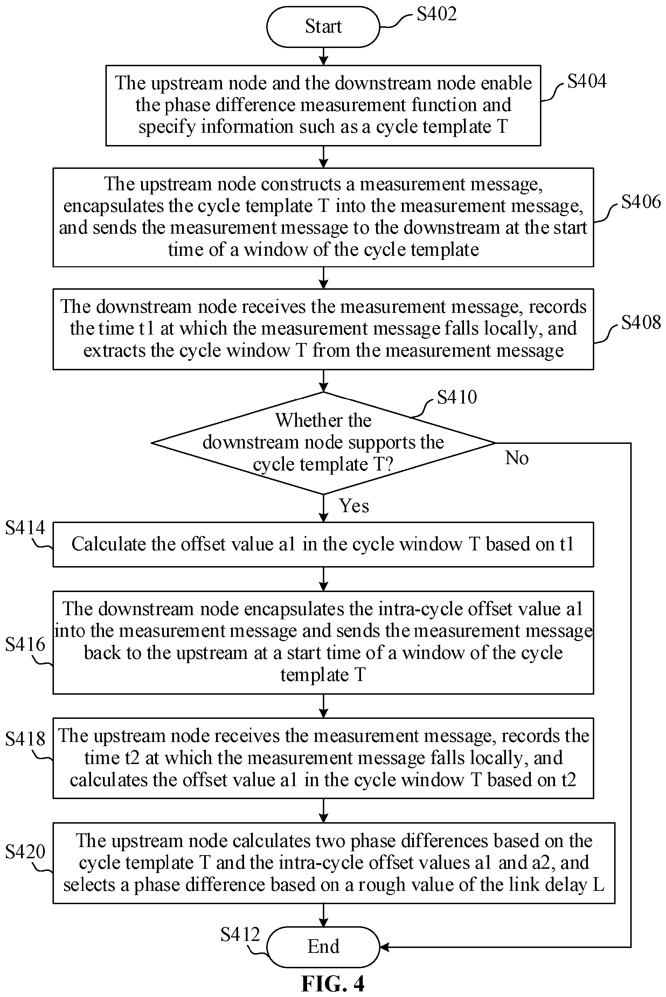

An embodiment of this disclosure provides a process of a method for measuring a phase difference. FIG. 4 is an overall flowchart of phase difference measurement according to an embodiment of this disclosure. As shown in FIG. 4, the process includes the following steps.

In S402, the process starts.

In S404, the upstream node and the downstream node enable the phase difference measurement function of this disclosure and specify information about a cycle template T (corresponding to the preceding target cycle template).

In S406, the upstream node constructs a measurement message, encapsulates the cycle template T into the measurement message, and sends the measurement message (corresponding to the first message) to the downstream at the start time (corresponding to the first start time) of a window of the cycle template (corresponding to the window of the target cycle template).

In S408, the downstream node receives the measurement message, records the time t1 (corresponding to a receiving time at which the downstream node receives the first message) at which the measurement message falls locally, and extracts the cycle window T.

In S410, a first determination is performed to determine whether the downstream node supports the cycle template T.

In S412, when the first determination result is no, the process ends.

In S414, when the first determination result is yes, the offset value $a1$ (corresponding to the first offset value) in the cycle window is calculated based on t1.

In S416, the downstream node encapsulates the intra-cycle offset value $a1$ into the measurement message and sends the measurement message (corresponding to the second message) back to the upstream node at a start time (corresponding to the second start time) of a window of the cycle template T.

In S418, the upstream node receives the measurement message, records the time t2 (corresponding to the receiving time at which the upstream node receives the second message) at which the measurement message falls locally, and calculates the offset value $a2$ (corresponding to the second offset value) in the cycle window T based on t2.

In S420, the upstream node calculates two phase differences based on the cycle template T and the intra-cycle offset values $a1$ and $a2$, selects the phase difference $\Delta$ based on a rough value (corresponding to the estimated delay) of the link delay, and performs step S412.

In step S408, the downstream node extracts the cycle template window value T carried in the measurement message. If the downstream node found that the cycle template is not supported locally (that is, there is no cycle template locally), the downstream node does not perform subsequent calculation, and this measurement ends.

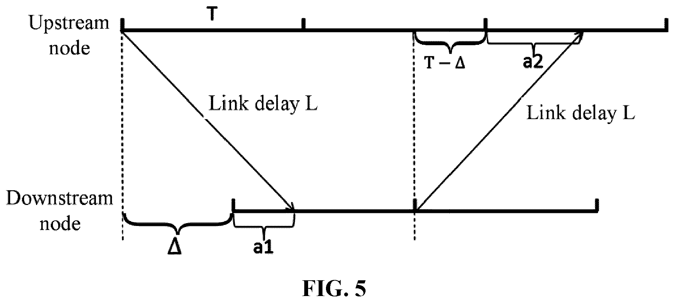

In step S420, FIG. 5 is a diagram of sending a measurement message according to an embodiment of this disclosure. As shown in FIG. 5, according to the cycle template T and the measured intra-cycle offset values $a1$ and $a2$, and assuming that the length of the link delay is L (unknown), the calculation principle of the phase difference is based on the following relationship:

$$\begin{cases} (L - \Delta)\%T = a1 & \text{①} \\ (L - (T - \Delta))\%T = a2 & \text{②} \end{cases} \quad (0 \le a1, a2 < T) ,$$

where % denotes a modulo operation. For example, 17%10 = 7, and -3%10 = 7. $\Delta$ denotes the phase difference.

In the preceding formula, ②-① = $(2\Delta - T)\%T = a2 - a1$.

Since $0 \le a1 < T$, and $0 \le a2 < T$, the preceding formula is equivalent to:

$$(2\Delta - T)\%T = (a2 - a1)\%T \Leftrightarrow (2\Delta - T - a2 + a1)\%T = 0 .$$

To make the preceding formula apply, $2\Delta - T - a2 + a1 = m*T$ is satisfied, and the phase difference $\Delta = \dfrac{a2 - a1 + (m+1)*T}{2}$ is obtained by deforming $2\Delta - T - a2 + a1 = m*T$, where m is an integer.

$0 \le \Delta < T$, so when $a2 \ge a1$, the possible values of m are -1 and 0; in the case where m < -1, $\Delta < 0$; and in the case where m > 0, $\Delta > T$, both of the cases do not satisfy the requirements. When $a2 < a1$, the possible values of m are 0 and 1; similarly, the cases of m > 1 and m < 0 do not satisfy the requirements; and the details are not repeated.

From the preceding, the calculation formula of the phase difference between the upstream node and the downstream node is as follows:

$$\Delta = \begin{cases} (a2 + T - a1)/2 \text{ or } (a2 - a1)/2, & \text{if } a2 \ge a1 \\ (a2 + T - a1)/2 \text{ or } (a2 + 2T - a1)/2, & \text{if } a2 < a1 \end{cases} \quad (\text{formula 1}).$$

For each pair of measurement values $a1$ and $a2$, two possible phase difference values can be obtained according to formula 1. Further, which value is selected as the final phase difference calculation result can be determined according to the rough value of the link delay L between the upstream node and the downstream node.

The two phase difference values obtained from the calculation can be configured to deduce the corresponding theoretical actual value of L. Therefore, to infer $\Delta$ from the measurement value of L, the measurement value of L should be located near the theoretical value. Since the interval between the two phase differences is T/2, when the offset of the measurement value of L from the theoretical value is not greater than T/4, one of the phase differences can be uniquely determined. Therefore, the offset range allowed for the measurement value of L is [0, T/4).

When $a2 > a1$, if the measurement value range of L is $n*T + \dfrac{a1+a2}{2} \pm \dfrac{T}{4}$, the phase difference value is $\dfrac{a2-a1}{2}$ (criterion 1). When the measurement value range of L is $n*T + \dfrac{a1+a2+T}{2} \pm \dfrac{T}{4}$, the phase difference value is $\dfrac{a2-a1+T}{2}$ (criterion 2).

When $a2 \le a1$, if the measurement value range of L is $n*T + \dfrac{a1+a2+T}{2} \pm \dfrac{T}{4}$, the phase difference value is $\dfrac{a2-a1+T}{2}$ (criterion 3), and if the value range of L is $n*T + \dfrac{a1+a2}{2} \pm \dfrac{T}{4}$, the phase difference value is $\dfrac{a2-a1+2T}{2}$ (criterion 4). Here n is an integer.

In summary, by using this method, it is not necessary to obtain the precise value of the link delay L between the upstream node and the downstream node. It is only required to acquire a rough value of L, with the allowable error range of L being [0, T/4), to obtain the precise value of the phase difference. For example, if the slot length of the cycle template is T = 10 $\mu$s, the required measurement accuracy of L is approximately $\pm$2.5 $\mu$s. If the slot length of the cycle template is T = 40 $\mu$s, the required measurement accuracy of L is approximately $\pm$10 $\mu$s. This significantly reduces the requirement for link delay accuracy. After the phase difference is obtained from measurement, the phase difference can be stored locally or announced to another node in the network.

This disclosure is further described hereinafter in conjunction with examples.

Example one

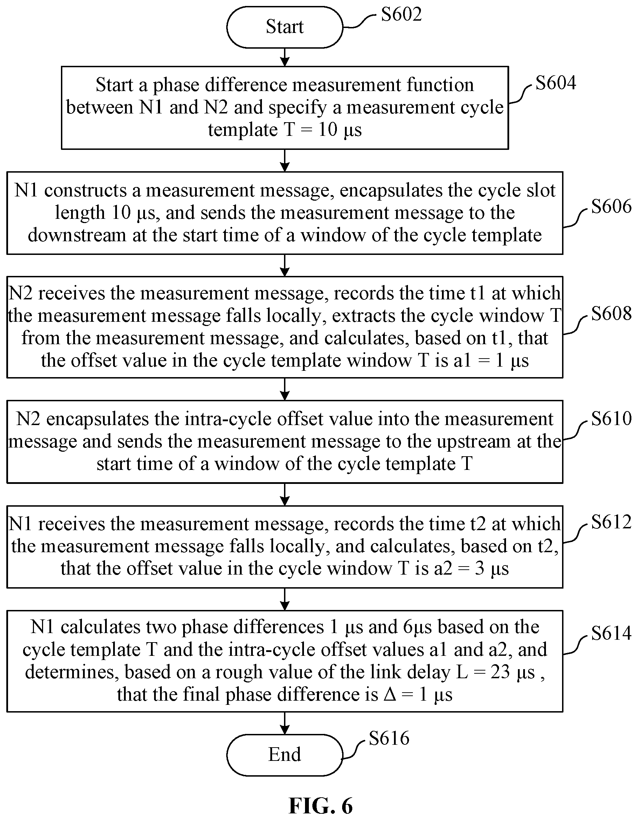

In this example, it is assumed that there are two network devices N1 and N2. The two devices are synchronized in frequency but not synchronized in time. In the service direction from N1 to N2, N1 is an upstream device node, and N2 is a downstream device node. Both N1 and N2 support the cycle template T = 10 $\mu$s. The measured rough length of the link delay between N1 and N2 is approximately 23 $\mu$s. FIG. 6 is a first flowchart of measuring a phase difference corresponding to a cycle template T between N1 and N2 according to an embodiment of this disclosure. As shown in FIG. 6, the process includes the following steps.

In S602, the process starts.

In S604, a phase difference measurement function between N1 and N2 is started, and a measurement cycle template T = 10 $\mu$s is specified.

In S606, N1 constructs a phase difference measurement message carrying the cycle template T = 10 $\mu$s, and sends the measurement message to N2 at the start time of a window of the cycle template T.

In S608, N2 receives the measurement message, records the message receiving time, extracts the cycle template T = 10 $\mu$s according to the measurement type, and calculates that the offset of the receiving time of the measurement message in the cycle template is $a1 = 1$ $\mu$s.

In S610, N2 encapsulates the offset value in the window of the cycle template T into the measurement message and sends the measurement message to N1 at the start time of a window of the cycle template T.

In S612, N1 receives the measurement message, records the receiving time of the measurement message, extracts the cycle template T = 10 $\mu$s according to the measurement type, and calculates that the offset of the receiving time of the measurement message in the cycle template is $a2 = 3$ $\mu$s.

In S614, N1 calculates, based on the cycle template T, $a1$, and $a2$, that the phase difference value is $\Delta = 1$ $\mu$s.

In S616, the process ends.

The steps of determining the phase difference are described as follows.

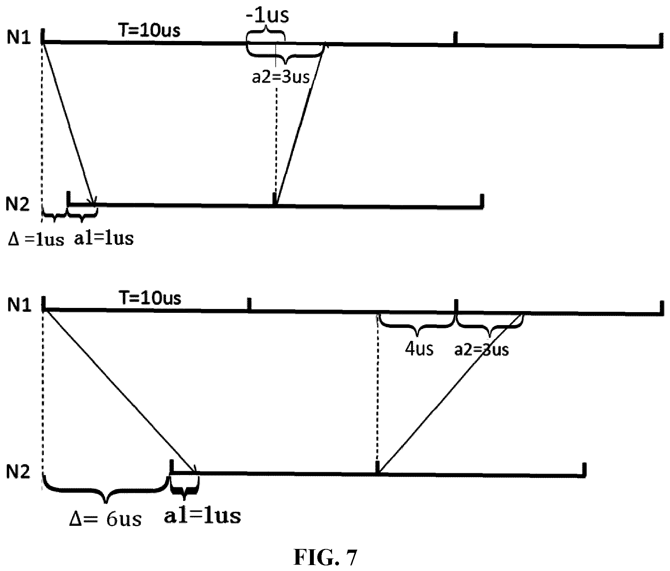

FIG. 7 is a first example diagram of a principle for calculating a phase difference according to an embodiment of this disclosure. As shown in FIG. 7, since $a2 > a1$, the value of $\Delta$ may be $(a2 - a1)/2 = 1\,\mu s$ or $(a2 - a1 + T)/2 = 6\,\mu s$ according to formula 1.

Further, the value range of L corresponding to $\Delta = 1\,\mu s$ is $n*T + 2 \pm 2.5\,\mu s$ (criterion 1), and the value range of L corresponding to $\Delta = 6\,\mu s$ is $n*T + 7 \pm 2.5\,\mu s$ (criterion 2). Since the measured rough value of L is approximately 23 $\mu s$, L can be expressed as $2*10 + 2 + 1\,\mu s$, which falls within the range of $n*T + 2 \pm 2.5\,\mu s$. Therefore, the final value of $\Delta$ is $1\mu s$.

Example two

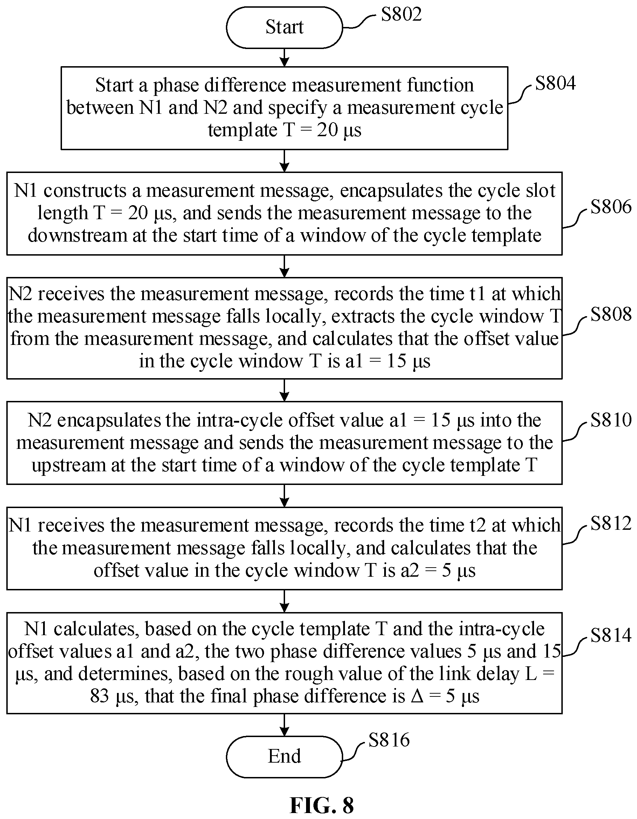

In this example, it is assumed that there are two network devices N1 and N2. The two devices are synchronized in frequency but not synchronized in time. In the service direction from N1 to N2, N1 is an upstream device node, and N2 is a downstream device node. Both N1 and N2 support the cycle template T = 20 $\mu s$. The measured rough length of the link delay between N1 and N2 is approximately 83 $\mu s$. FIG. 8 is a second flowchart of measuring a phase difference corresponding to a cycle template T between N1 and N2 according to an embodiment of this disclosure. As shown in FIG. 8, the process includes the following steps.

In S802, the process starts.

In S804, a phase difference measurement function between N1 and N2 is started, and a measurement cycle template T = 20 $\mu s$ is specified.

In S806, N1 constructs a phase difference measurement message carrying the cycle template T = 20 $\mu s$, and sends the measurement message to N2 at the start time of a window of the cycle template T.

In S808, N2 receives the measurement message, records the message receiving time, extracts the cycle template T = 20 $\mu s$ according to the measurement type, and calculates that the offset of the receiving time of the measurement message in the cycle template is $a1 = 15\,\mu s$.

In S810, N2 encapsulates the offset value in the window of the cycle template T into the measurement message and sends the measurement message to N1 at the start time of a window of the cycle template T.

In S812, N1 receives the measurement message, records the message receiving time, extracts the cycle template T = 20 $\mu s$ according to the measurement type, and calculates that the offset of the receiving time of the measurement message in the cycle template is $a2 = 5\,\mu s$.

In S814, N1 calculates, based on the cycle template T, $a1$, and $a2$, that the phase difference value is $\Delta = 5\,\mu s$.

In S816, the process ends.

The steps of determining the phase difference are described as follows.

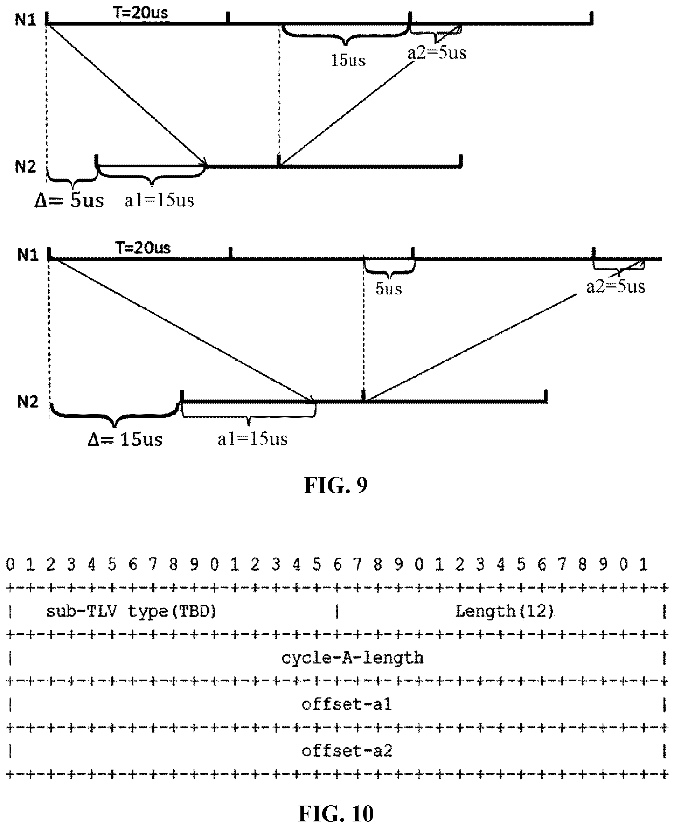

FIG. 9 is a second example diagram of a principle for calculating a phase difference according to an embodiment of this disclosure. As shown in FIG. 9, since $a2 < a1$, the value of $\Delta$ may be $(a2 - a1 + T)/2 = 5\,\mu s$ or $(a2 - a1 + 2T)/2 = 15\,\mu s$ according to formula 1.

Further, the value range of L corresponding to $\Delta = 5\,\mu s$ is $n*T + 20 \pm 5\,\mu s$ (criterion 3), and the value range of L corresponding to $\Delta = 15\,\mu s$ is $n*T + 10 \pm 5\,\mu s$ (criterion 4). Since the measured rough value of L is approximately 83 $\mu s$, L can be expressed as $3*20 + 20 + 3\,\mu s$, which falls within the range of $n*T + 20 \pm 5\,\mu s$. Therefore, the final value of $\Delta$ is $5\,\mu s$.

Example three

This example provides a phase difference measurement message encapsulation example. For example, a new sub-TLV called phase-measurement sub-TLV (phase-measurement sub-type length value) can be added to a performance measurement message of an Operations, Administration and Maintenance (OAM) protocol that supports sub-TLV extension. This sub-TLV is used to carry the necessary information for phase difference measurement message. For example, an OAM performance measurement protocol based on G-Ach is used. The measurement protocol used is not limited in this application.

FIG. 10 is a diagram of a sub-TLV encapsulation format according to an embodiment of this disclosure. As shown in FIG. 10, the type field is used for indicating that this sub-TLV is the phase difference measurement type, with the value to be determined. The length field is used for indicating the length of this sub-TLV in units of octets (8-bit bytes) and has a value of 12. The cycle-length field is used for indicating the slot length of the cycle template to be measured, in microseconds, occupying 4 octets. For example, a value of 10 in the cycle-length field indicates that the offset of a 10-$\mu s$ cycle is to be measured. offset-a1 field is used for indicating that the intra-cycle offset value $a1$ of the measurement message received by the downstream node, occupying 4 octets. offset-a2 field is used for indicating that the intra-cycle offset measurement value $a2$ of the returned measurement message received by the upstream node, also occupying 4 octets. $a2$ may also not be carried in the message, in which case the length field has a length of 8 octets.

Based on the analysis of the preceding embodiments, the method for determining a phase difference according to this application enables convenient phase difference measurement even in the absence of precise link delay information. The upstream node sends a measurement message to the downstream node at the start time of the cycle window. The downstream node records the position of the measurement message within the cycle window, encapsulates the offset value $a1$ into the measurement message, and sends the message back to the upstream node at the start time of the cycle window of the downstream node. The upstream node also records the position of the measurement message within the cycle window. Then the upstream node calculates the phase difference value based on the data recorded and carried in the measurement message.

It is to be noted that the phase difference measurement process and message encapsulation format described in the preceding embodiments are illustrative and do not limit the scope of this application.

From the description of the preceding embodiments, it is apparent to those skilled in the art that the method in the preceding embodiments may be implemented by software plus a necessary general-purpose hardware platform or may of course be implemented by hardware. However, in many cases, the former is a preferred implementation. Based on this understanding, the solutions provided by this disclosure substantially, or the part contributing to the related art, may be embodied in the form of a software product. The computer software product is stored in a storage medium (such as a ROM/a RAM, a magnetic disk or an optical disk) and includes several instructions for enabling terminal equipment (which may be a mobile phone, a computer, a server, network equipment or the like) to perform the method according to each embodiment of this disclosure.

An embodiment provides an apparatus for determining a phase difference. The apparatus is configured to implement the previous embodiments and preferred embodiments. What has been described is not repeated. As used below, the term "module" may be software, hardware, or a combination thereof capable of implementing predetermined functions. The apparatus in the embodiment described below is preferably implemented by software, but an implementation by hardware or by a combination of software and hardware is also possible and conceivable.

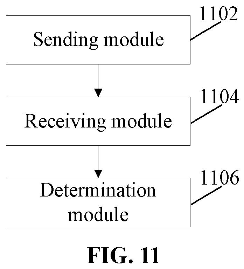

FIG. 11 is a block diagram of an apparatus for determining a phase difference according to an embodiment of this disclosure. As shown in FIG. 11, the apparatus includes a sending module 1102, a receiving module 1104, and a determination module 1106.

The sending module 1102 is configured to send a first message to a downstream node at a first start time of a window of a predetermined target cycle template, where the first message carries a target slot length of the target cycle template.

The receiving module 1104 is configured to receive a second message returned by the downstream node at a second start time of a window of the target cycle template, where the second message carries a first offset value, the first offset value is used for indicating an offset of a receiving time at which the downstream node receives the first message in the target cycle template, and the target slot length is used by the downstream node for determining the target cycle template.

The determination module 1106 is configured to determine, based on the target slot length, the first offset value, and a second offset value, a phase difference between the target cycle template used by the upstream node and the target cycle template used by the downstream node, where the second offset value is used for indicating an offset of a receiving time at which the upstream node receives the second message in the target cycle template.

In an example embodiment, the determination module 1106 includes a first determination submodule, a second determination submodule, and a third determination submodule.

The first determination submodule is configured to determine a second relationship among the phase difference, the target slot length, the first offset value, and the second offset value based on a first relationship between the first offset value and the second offset value.

The second determination submodule is configured to, in response to determining based on the second relationship that the phase difference has multiple values, determine a respective link delay range corresponding to each value of the phase difference to obtain multiple link delay ranges, where a link delay is a link delay between the upstream node and the downstream node.

The third determination submodule is configured to determine the unique value of the phase difference based on a third relationship between each link delay range and an estimated delay obtained by pre-estimating the link delay.

In an example embodiment, the first determination submodule includes at least one of a first determination unit or a second determination unit.

The first determination unit is configured to, in response to the first relationship indicating that the first offset value is less than or equal to the second offset value, determine that the second relationship satisfies the following formula: $\Delta = (a2 + T - a1) / 2$ or $\Delta = (a2 - a1) / 2$.

The second determination unit is configured to, in response to the first relationship indicating that the first offset value is greater than the second offset value, determine that the second relationship satisfies the following formula: $\Delta = (a2 + T - a1) / 2$ or $\Delta = (a2 + 2T - a1) / 2$.

Here $\Delta$ denotes the phase difference, $T$ denotes the target slot length, $a1$ denotes the first offset value, and $a2$ denotes the second offset value.

In an example embodiment, the second determination submodule is configured to determine the respective link delay range corresponding to each value of the phase difference in at least one of the following manners: in response to the

phase difference Δ = (a2 - a1) / 2, determine that the link delay range is $n*T+\dfrac{a1+a2}{2}\pm\dfrac{T}{4}$ ; in response to the first relationship indicating that the first offset value is less than or equal to the second offset value and in response to the phase

difference Δ = (a2 + T - a1) / 2 , determine that the link delay range is $n*T+\dfrac{a1+a2+T}{2}\pm\dfrac{T}{4}$ ; in response to the first relationship indicating that the first offset value is greater than the second offset value and in response to the phase

difference Δ = (a2 + T - a1) / 2 , determine that the link delay range is $n*T+\dfrac{a1+a2+T}{2}\pm\dfrac{T}{4}$ ; or in response to the

phase difference Δ = (a2 + 2T - a1) / 2 , determine that the link delay range is $n*T+\dfrac{a1+a2}{2}\pm\dfrac{T}{4}$ .

Here n is an integer.

In an example embodiment, the third determination submodule includes a third determination unit and a fourth determination unit.

The third determination unit is configured to determine a target link delay range from the link delay ranges based on the third relationship, where the target link delay range is a range within which the estimated delay falls.

The fourth determination unit is configured to determine the unique value of the phase difference corresponding to the target link delay range.

In an example embodiment, the first message includes a first type field and a first length field. The first type field is used for indicating that the type of the first message is a type used for measurement of the phase difference. The first length field is used for indicating the target slot length.

In an example embodiment, the second message includes a second type field, a second length field, and a compensation field. The second type field is used for indicating that the type of the second message is a type used for measurement of the phase difference. The second length field is used for indicating the target slot length. The compensation field is used for indicating the first offset value.

In an example embodiment, the apparatus also includes at least one of a saving module or an announcing module.

The saving module is configured to store the phase difference locally in the upstream node after the phase difference between the target cycle template used by the upstream node and the target cycle template used by the downstream node is determined based on the target slot length, the first offset value, and the second offset value.

The announcing module is configured to announce the phase difference to another network node after the phase difference between the target cycle template used by the upstream node and the target cycle template used by the downstream node is determined based on the target slot length, the first offset value, and the second offset value.

It is to be noted that the various modules may be implemented by software or hardware. An implementation by hardware may, but may not necessarily, be performed in the following manners: the various modules are located in the same processor, or the various modules are located in their respective processors in any combination form.

An embodiment of this disclosure also provides a computer-readable storage medium. The storage medium stores a computer program which, when executed by a processor, causes the processor to perform steps of the method of any previous method embodiment.

In an example embodiment, the storage medium may include, but is not limited to, a U disk, a read-only memory (ROM), a random-access memory (RAM), a mobile hard disk, a magnetic disk, an optical disk, or another medium capable of storing a computer program.

An embodiment of this disclosure also provides an electronic device. The electronic device includes a memory and a processor. The memory stores a computer program. The processor is configured to execute the computer program to perform steps in any previous method embodiment.

In an example embodiment, the electronic device may also include a transmission device and an input/output device. Both the transmission device and the input/output device are connected to the processor.

For examples in this embodiment, reference may be made to the examples described in the preceding embodiments and example embodiments, and the examples are not repeated in this embodiment.

Apparently, it is to be understood by those skilled in the art that each of the preceding modules or steps of this disclosure may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this manner, this disclosure is not limited to any particular combination of hardware and software.

The preceding are preferred embodiments of this disclosure and are not intended to limit this disclosure. For those skilled in the art, embodiments of this disclosure may have various modifications and variations. Any modifications, equivalent substitutions, improvements, and the like within the principle of this disclosure are within the scope of this disclosure.

**Claims**

1. A method for determining a phase difference, the method being applied to an upstream node and comprising:

   sending a first message to a downstream node at a first start time of a window of a predetermined target cycle template, wherein the first message carries a target slot length of the target cycle template;
   receiving a second message returned by the downstream node at a second start time of a window of the target cycle template, wherein the second message carries a first offset value, the first offset value is used for indicating an offset of a receiving time at which the downstream node receives the first message in the target cycle template, and the target slot length is used by the downstream node for determining the target cycle template; and
   determining, based on the target slot length, the first offset value, and a second offset value, a phase difference between the target cycle template used by the upstream node and the target cycle template used by the downstream node, wherein the second offset value is used for indicating an offset of a receiving time at which the upstream node receives the second message in the target cycle template.

2. The method of claim 1, wherein determining, based on the target slot length, the first offset value, and the second offset value, the phase difference between the target cycle template used by the upstream node and the target cycle template used by the downstream node comprises:

   determining a second relationship among the phase difference, the target slot length, the first offset value, and the second offset value based on a first relationship between the first offset value and the second offset value;
   in response to determining based on the second relationship that the phase difference has a plurality of values, determining a respective link delay range corresponding to each of the plurality of values of the phase difference to obtain a plurality of link delay ranges, wherein a link delay is a link delay between the upstream node and the downstream node; and
   determining a unique value of the phase difference based on a third relationship between each of the plurality of link delay ranges and an estimated delay obtained by pre-estimating the link delay.

3. The method of claim 2, wherein determining the second relationship among the phase difference, the target slot length, the first offset value, and the second offset value based on the first relationship between the first offset value and the second offset value comprises at least one of the following:

   in response to the first relationship indicating that the first offset value is less than or equal to the second offset value, determining that the second relationship satisfies the following formula:

$$\Delta = (a2 + T - a1)/2 \quad \text{or} \quad \Delta = (a2 - a1)/2;$$

   or
   in response to the first relationship indicating that the first offset value is greater than the second offset value, determining that the second relationship satisfies the following formula: $\Delta = (a2 + T - a1)/2$ or $\Delta = (a2 + 2T - a1)/2$; wherein $\Delta$ denotes the phase difference, $T$ denotes the target slot length, $a1$ denotes the first offset value, and $a2$ denotes the second offset value.

4. The method of claim 3, wherein determining the respective link delay range corresponding to each of the plurality of values of the phase difference comprises at least one of the following:

   in response to the phase difference $\Delta = (a2 - a1)/2$, determining that the link delay range is

$$n * T + \frac{a1 + a2}{2} \pm \frac{T}{4} \, ;$$

in response to the first relationship indicating that the first offset value is less than or equal to the second offset value and in response to the phase difference $\Delta = (a2 + T - a1) / 2$, determining that the link delay range is

$$n * T + \frac{a1 + a2 + T}{2} \pm \frac{T}{4} \, ;$$

in response to the first relationship indicating that the first offset value is greater than the second offset value and in response to the phase difference $\Delta = (a2 + T - a1) / 2$, determining that the link delay range is

$$n * T + \frac{a1 + a2 + T}{2} \pm \frac{T}{4} \, ; \text{ or}$$

in response to the phase difference $\Delta = (a2 + 2T - a1) / 2$, determining that the link delay range is

$$n * T + \frac{a1 + a2}{2} \pm \frac{T}{4} \, ;$$

wherein $n$ is an integer.

5. The method of claim 2, wherein determining the unique value of the phase difference based on the third relationship between each of the plurality of link delay ranges and the estimated delay obtained by pre-estimating the link delay comprises:

   determining a target link delay range from the plurality of link delay ranges based on the third relationship, wherein the target link delay range is a range within which the estimated delay falls; and
   determining the unique value of the phase difference corresponding to the target link delay range.

6. The method of claim 1, wherein the first message comprises a first type field and a first length field, wherein the first type field is used for indicating that a type of the first message is a type used for measurement of the phase difference, and the first length field is used for indicating the target slot length.

7. The method of claim 1, wherein the second message comprises a second type field, a second length field, and a compensation field, wherein the second type field is used for indicating that a type of the second message is a type used for measurement of the phase difference, the second length field is used for indicating the target slot length, and the compensation field is used for indicating the first offset value.

8. The method of claim 1, after determining, based on the target slot length, the first offset value, and the second offset value, the phase difference between the target cycle template used by the upstream node and the target cycle template used by the downstream node, the method further comprising at least one of the following:

   saving the phase difference locally in the upstream node; or
   announcing the phase difference to another network node.

9. An apparatus for determining a phase difference, the apparatus being applied to an upstream node and comprising:

   a sending module configured to send a first message to a downstream node at a first start time of a window of a predetermined target cycle template, wherein the first message carries a target slot length of the target cycle template;
   a receiving module configured to receive a second message returned by the downstream node at a second start time of a window the target cycle template, wherein the second message carries a first offset value, the first offset value is used for indicating an offset of a receiving time at which the downstream node receives the first message in the target cycle template, and the target slot length is used by the downstream node for determining the target cycle template; and
   a determination module configured to determine, based on the target slot length, the first offset value, and a second offset value, a phase difference between the target cycle template used by the upstream node and the target cycle template used by the downstream node, wherein the second offset value is used for indicating an offset of a receiving time at which the upstream node receives the second message in the target cycle template.

10. A computer-readable storage medium storing a computer program which, when executed by a processor, causes the processor to perform steps of the method of any one of claims 1 to 8.

11. An electronic device, comprising a memory, a processor, and a computer program stored in the memory and executable on the processor, wherein when executing the computer program, the processor is configured to perform steps of the method of any one of claims 1 to 8.

**FIG. 1**

Input and output device 208

Transmission device 206

Processor 202

Memory 204

**FIG. 2**

Send a first message to a downstream node at a first start time of a window of a predetermined target cycle template, where the first message carries a target slot length of the target cycle template — S302

Receive a second message returned by the downstream node at a second start time of a window of the target cycle template, where the second message carries a first offset value, the first offset value is used for indicating an offset of a receiving time at which the downstream node receives the first message in the target cycle template, and the target slot length is used by the downstream node for determining the target cycle template — S304

Determine a phase difference between the target cycle template used by the upstream node and the target cycle template used by the downstream node based on the target slot length, the first offset value, and a second offset value, where the second offset value is used for indicating an offset of a receiving time at which the upstream node receives the second message in the target cycle template — S306

**FIG. 3**

Start — S402

The upstream node and the downstream node enable the phase difference measurement function and specify information such as a cycle template T — S404

The upstream node constructs a measurement message, encapsulates the cycle template T into the measurement message, and sends the measurement message to the downstream at the start time of a window of the cycle template — S406

The downstream node receives the measurement message, records the time t1 at which the measurement message falls locally, and extracts the cycle window T from the measurement message — S408

S410
Whether the downstream node supports the cycle template T?

No

Yes

S414 — Calculate the offset value a1 in the cycle window T based on t1

S416 — The downstream node encapsulates the intra-cycle offset value a1 into the measurement message and sends the measurement message back to the upstream at a start time of a window of the cycle template T

S418 — The upstream node receives the measurement message, records the time t2 at which the measurement message falls locally, and calculates the offset value a1 in the cycle window T based on t2

S420 — The upstream node calculates two phase differences based on the cycle template T and the intra-cycle offset values a1 and a2, and selects a phase difference based on a rough value of the link delay L

S412 — End

**FIG. 4**

FIG. 5

Start — S602

Start a phase difference measurement function between N1 and N2 and specify a measurement cycle template T = 10 μs — S604

N1 constructs a measurement message, encapsulates the cycle slot length 10 μs, and sends the measurement message to the downstream at the start time of a window of the cycle template — S606

N2 receives the measurement message, records the time t1 at which the measurement message falls locally, extracts the cycle window T from the measurement message, and calculates, based on t1, that the offset value in the cycle template window T is a1 = 1 μs — S608

N2 encapsulates the intra-cycle offset value into the measurement message and sends the measurement message to the upstream at the start time of a window of the cycle template T — S610

N1 receives the measurement message, records the time t2 at which the measurement message falls locally, and calculates, based on t2, that the offset value in the cycle window T is a2 = 3 μs — S612

N1 calculates two phase differences 1 μs and 6μs based on the cycle template T and the intra-cycle offset values a1 and a2, and determines, based on a rough value of the link delay L = 23 μs, that the final phase difference is Δ = 1 μs — S614

End — S616

**FIG. 6**

**FIG. 7**

Start — S802

Start a phase difference measurement function between N1 and N2 and specify a measurement cycle template T = 20 μs — S804

N1 constructs a measurement message, encapsulates the cycle slot length T = 20 μs, and sends the measurement message to the downstream at the start time of a window of the cycle template — S806

N2 receives the measurement message, records the time t1 at which the measurement message falls locally, extracts the cycle window T from the measurement message, and calculates that the offset value in the cycle window T is a1 = 15 μs — S808

N2 encapsulates the intra-cycle offset value a1 = 15 μs into the measurement message and sends the measurement message to the upstream at the start time of a window of the cycle template T — S810

N1 receives the measurement message, records the time t2 at which the measurement message falls locally, and calculates that the offset value in the cycle window T is a2 = 5 μs — S812

N1 calculates, based on the cycle template T and the intra-cycle offset values a1 and a2, the two phase difference values 5 μs and 15 μs, and determines, based on the rough value of the link delay L = 83 μs, that the final phase difference is Δ = 5 μs — S814

End — S816

**FIG. 8**

FIG. 9

```
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|    sub-TLV type(TBD)          |           Length(12)          |
+-+-+-+-+-+-+-+-+-+-+-+-+-+-+-+-+-+-+-+-+-+-+-+-+-+-+-+-+-+-+-+-+
|                        cycle-A-length                         |
+-+-+-+-+-+-+-+-+-+-+-+-+-+-+-+-+-+-+-+-+-+-+-+-+-+-+-+-+-+-+-+-+
|                          offset-a1                            |
+-+-+-+-+-+-+-+-+-+-+-+-+-+-+-+-+-+-+-+-+-+-+-+-+-+-+-+-+-+-+-+-+
|                          offset-a2                            |
+-+-+-+-+-+-+-+-+-+-+-+-+-+-+-+-+-+-+-+-+-+-+-+-+-+-+-+-+-+-+-+-+
```

FIG. 10

Sending module — 1102

Receiving module — 1104

Determination module — 1106

**FIG. 11**

## INTERNATIONAL SEARCH REPORT

| International application No. |
|---|
| **PCT/CN2023/089873** |

### A. CLASSIFICATION OF SUBJECT MATTER

H04L45/12(2022.01)i

According to International Patent Classification (IPC) or to both national classification and IPC

### B. FIELDS SEARCHED

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

CNTXT, ENTXTC, VEN, IETF: 时隙, 周期, 相位, 差, 偏移, 同步, 确定性, slot, cycle, period, phase, offset, synchronization, deterministic

### C. DOCUMENTS CONSIDERED TO BE RELEVANT

| Category* | Citation of document, with indication, where appropriate, of the relevant passages | Relevant to claim No. |
|---|---|---|
| A | CN 114221731 A (BEIJING CO WHEELS TECHNOLOGY CO., LTD.) 22 March 2022 (2022-03-22)<br>description, paragraphs 0064-0079 | 1-11 |
| A | CN 112600641 A (SHENZHEN YINGTERUI SEMICONDUCTOR TECHNOLOGY CO., LTD.) 02 April 2021 (2021-04-02)<br>entire document | 1-11 |
| A | CN 114258126 A (SHANGHAI HUAWEI TECHNOLOGIES CO., LTD.) 29 March 2022 (2022-03-29)<br>entire document | 1-11 |
| A | US 2022182330 A1 (HUAWEI TECHNOLOGIES CO., LTD.) 09 June 2022 (2022-06-09)<br>entire document | 1-11 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2023** | **11 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 114221731 | A | 22 March 2022 | None | | | |
| CN | 112600641 | A | 02 April 2021 | None | | | |
| CN | 114258126 | A | 29 March 2022 | WO | 2022063078 | A1 | 31 March 2022 |
| US | 2022182330 | A1 | 09 June 2022 | WO | 2021036915 | A1 | 04 March 2021 |
| | | | | EP | 4016942 | A1 | 22 June 2022 |
| | | | | CN | 112448896 | A | 05 March 2021 |

Form PCT/ISA/210 (patent family annex) (July 2022)